# EUROPÄISCHE PATENTSCHRIFT

(11) **EP 1 714 352 B1**
(45) Veröffentlichungstag und Bekanntmachung des Hinweises auf die Patenterteilung: **30.05.2012**
(21) Anmeldenummer: 05700547.2
(22) Anmeldetag: 15.01.2005
(51) Int. Cl.: H01Q 1/44, H01Q 1/27, H01Q 9/16

(54) **TEXTILMATERIAL MIT ANTENNENKOMPONENTEN EINES HF-TRANSPONDERS**
TEXTILE MATERIAL WITH ANTENNA COMPONENTS FOR AN HF TRANSPONDER
MATERIAU TEXTILE PRESENTANT DES COMPOSANTS D'ANTENNE D'UN TRANSPONDEUR RF

(30) Priorität: 30.01.2004 DE 102004005017
(43) Veröffentlichungstag der Anmeldung: 25.10.2006
(73) Patentinhaber: ASTRA Gesellschaft für Asset Management mbH & Co. KG, 30890 Barsinghausen (DE)
(72) Erfinder: STOBBE, Anatoli, 30890 Barsinghausen (DE)
(74) Vertreter: Patentanwälte Thömen & Körner
(86) Internationale Anmeldenummer: PCT/DE2005/000056
(87) Internationale Veröffentlichungsnummer: WO 2005/074071

(56) Entgegenhaltungen:
- WO-A-01/36728
- DE-C1- 19 843 237
- US-A- 5 906 004
- US-A1- 2001 050 645
- US-A1- 2003 085 619

## Beschreibung

Die Erfindung betrifft ein Textilmaterial mit Antennenkomponenten eines HF-Transponders nach dem Oberbegriff des Anspruchs 1.

Zur Identifikation von Waren bei Produktion, Logistik, Vertrieb und Reparatur werden zunehmend Transponder eingesetzt, die hinsichtlich Lesbarkeit und Datenvolumen sowie Manipulationssicherheit üblichen Barcodes überlegen sind. Der Einsatz von Transpondern wird auch bei textilen Waren angestrebt, wegen ihres flexiblen Charakters und der Notwendigkeit der Reinigung in heißen und/oder chemisch aggressiven Medien werden aber höhere Anforderungen gestellt.

So darf der Transponder den bestimmungsgemäßen Gebrauch der textilen Waren nicht beeinträchtigen, muss gegen mechanische, thermische und chemische Einflüsse resistent sein und trotzdem physikalisch zuverlässig arbeiten.

Es ist bekannt, Textiletiketten mit Transpondern auszustatten, die im 13 MHz-Bereich arbeiten. Als Antennen dienen M-Feld-Strahler mit kernlosen Spulen, auch als Luftspulen bezeichnet. Die Luftspulen können in Form von Leiterbahnen aus Metall auf Folienträgern ausgeführt sein. Kombinationen aus einer Folienschicht und einer Textilschicht, z. B. als Laminate, sind beim bestimmungsgemäßen Gebrauch und beim Reinigen der textilen Ware meist unverträglich. Die Folie kann sich stellenweise oder ganz lösen und/oder beschädigt werden. Da Textiletiketten in der Regel erst in die Fertigware eingesetzt werden, und daraus auch wieder entfernt werden können, ist eine Identifizierung der Rohware nur indirekt möglich und manipulationsanfällig.

Aus der US 2001/0050645 A1 sind portable Antennen an einem Kleidungsstück bekannt, die mit einem elektronischen Gerät verbindbar sind. Die Druckschrift zeigt mehrere Varianten. Eine erste Ausführung zeigt eine als Monopol ausgebildete Antenne. Eine zweite Ausführung zeigt mehrere parallel laufende leitfähige Fäden, die gemeinsam genutzt werden. Eine dritte Ausführung zeigt eine flächige Struktur ohne einezelne Fäden. Die Lage der Antennen richtet sich nach Fertigprodukt, kann also nicht an beliebiger Stelle im Rohmaterial angeordnet werden.

Aus der WO 01/36728 A1 ist ein Textilmaterial bekannt, in das leitfähige Fäden eingebracht sind. Die leitfähigen Fäden dienen zur Übertragung von elektrischer Energie und Daten zwischen elektronischen Schaltungen auf dem Textilmaterial.

Der Erfindung liegt die Aufgabe zugrunde, ein Textilmaterial mit Antennenkomponenten eines HF-Transponders zu schaffen, die sich integral in eine Rohware bereits während der Herstellung einfügen lassen und eine physikalisch zuverlässige Nutzung ermöglichen.

Diese Aufgabe wird bei einem Textilmaterial mit Antennenkomponenten eines HF-Transponders nach dem Oberbegriff des Anspruchs 1 durch die Merkmale dieses Anspruchs gelöst.

Weiterbildungen und vorteilhafte Ausgestaltungen ergeben sich aus den Unteransprüchen.

Durch die Ausbildung der Antennenkomponenten als E-Feld-Strahler, auch als elektrische Antenne bezeichnet, lässt sich mit einer einfachen Geometrie eine Abstimmung auf eine Arbeitsfrequenz im UHF- oder Mikrowellenbereich erzielen. Der verfügbare Platz ist nämlich größer als bei Etiketten, so dass die Ausgestaltung von induktiven oder kapazitiven Verlängerungselementen nicht nötig ist. Mit einem E-Feld-Strahler wird im Nahbereich eine höhere elektrische Komponente des elektromagnetischen Wechselfeldes gebildet, als bei einem M-Feld-Strahler. Der E-Feld-Strahler ist daher hochohmig und nicht so anfällig gegen weniger gut elektrisch leitfähige Materialien und Übergangswiderstände bei Verbindungen und verfügt über einen höheren Wirkungsgrad. Außerdem ist der E-Feld-Strahler breitbandiger als ein M-Feld-Strahler, so dass größere Toleranzen hinsichtlich Übereinstimmung seiner Resonanzfrequenz mit der Arbeitsfrequenz zulässig sind. Der E-Feld-Strahler ermöglicht so eine problemlose Integration in das Textilmaterial, wodurch der Transponder im Gegensatz zu der Ausführung als Folienetikett mit texilfremdem Charakter jetzt bezüglich der Antenne rein textile Eigenschaften annimmt.

Bei einer Arbeitsfrequenz im UHF-Bereich, zugelassen ist hier ein Bereich zwischen 860 MHz und 930 MHz und im Mikrowellenbereich bei ca. 2400 MHz können ungekürzte Halbwellen- oder Viertelwellenstrahler eingesetzt werden, wenn eine größere Fläche als bei Textiletiketten üblich zur Verfügung steht.

Bei der mit gegenseitigem Abstand mehrfachen Anordnung der Antennenkomponenten kann aus einer Auswahl möglicher Antennenkomponenten die für den Zuschnitt der Ware oder die fertige Ware günstigste Position getroffen werden. Der Abstand der Antennenkomponenten wird zweckmäßig so bemessen, dass keine oder nur eine geringe Beeinflussung oder Verstimmung der als aktiv genutzten Antenne eintritt.

Die Antennenkomponenten können bei bahnförmigem Material in Bahnrichtung und/oder schräg zur Bahnrichtung und/oder quer zur Bahnrichtung ausgerichtet angeordnet sein.

Auf diese Weise lassen sich durchgehend oder in Abständen Antennenkomponenten zum späteren Anschluss von Schaltungsmodulen schaffen. Komplette Textilbahnen sind so nach dem Herstellungsprozess und Zuschnitt auf die Fertigware bereits zum Anschluss von Schaltungsmodulen vorbereitet.

Durch die Herstellung in einem textilüblichen industriellen Fertigungsprozess gelingt eine kostengünstige Realisierung des E-Feld-Strahlers in einem der Fertigungsschritte, die ohnehin bei der Fertigung des Textilmaterials durchgeführt werden müssen. Die gleichen Qualitätskriterien des textilen Fertigungsprozesses kommen so auch der Qualität und Reproduzierbarkeit des E-Feld-Strahlers zugute. Zwangsläufig wird der E-Feld-Strahler so integraler Bestandteil des Textilmaterials selbst und beeinträchtigt nicht den bestimmungsgemäßen Gebrauch der textilen Ware.

Die elektrisch leitfähige Fadenkonstruktion kann ein mit Metall beschichteter Kunststofffaden; ein mit einem Metalldraht oder eine Metalllitze umwickelter Kunststofffaden, ein Kunststofffaden mit einem integrierten Metalldraht oder einer integrierten Metalllitze oder ein Graphitfaden sein.

Die Auswahl richtet sich danach, welche Art von elektrisch leitfähigen Fäden mit dem jeweiligen Fertigungsprozess verarbeitbar sind, welche Art von elektrisch leitfähigen Fäden ausreichende elektrische Leiteigenschaften aufweisen, auf welche Art eine Kontaktierung mit Anschlüssen des Schaltungsmoduls vorgenommen wird und ob und welche chemischen Einflüsse ausgeübt werden.

Die elektrisch leitfähige Fadenkonstruktion kann durchgehend leitende und an Anschlussstellen und Strahlerenden auftrennbare Fäden umfassen.

Damit können Schaltungsmodule an nahezu beliebigen Stellen der elektrisch leitfähigen Fadenkonstruktion angeschlossen werden und die Antenne auf die Arbeitsfrequenz abgestimmt werden. Es ergeben sich so vielfältige Anschlussmöglichkeiten für die Schaltungsmodule und Abstimmmöglichkeiten der als aktive Transponderantenne genutzten Antennenkomponenten.

Ergänzend können auch benachbarte Fäden bei Anschluss eines Schaltungsmoduls auftrennbar sein.

Dadurch wird eine mögliche Verstimmung, Dämpfung oder Abschirmung der aktiven Transponderantenne beseitigt.

Alternativ kann die elektrisch leitfähige Fadenkonstruktion zwischen Anschlussstellen und Strahlerenden partiell leitende Fäden umfassen.

Hierbei wird die Installation eines Transponders vereinfacht, indem nur das Schaltungsmodul an die Anschlussstellen angeschlössen werden muss. Ein Auftrennen der Fäden ist nicht möglich.

Die Fäden können an Austrittsstellen an die Oberfläche des Textilmaterials treten, die der Lage von Anschlussstellen und Strahlerenden entsprechen und durchgehend leitende Fäden hier auftrennbar sind.

Bei im Gewebe verborgen liegenden elektrisch leitfähigen Fäden wird so der Anschluss des Schaltungsmoduls erleichtert.

Zweckmäßig weisen die Austrittsstellen einen Abstand von λ/4 der Wellenlänge der Arbeitsfrequenz auf.

Auf diese Weise kann man sich auf die notwendigen Austrittsstellen beschränken und die elektrisch leitfähigen Fäden im Übrigen verborgen im Gewebe unterbringen.

Die Antennenkomponenten weisen wenigstens eine Anschlussstelle zur Verbindung mit Antennenanschlüsse des Schaltungsmoduls durch Krimpverbindungen, Schweißverbindungen, Lötverbindungen oder Klebeverbindungen mit leitfähigem Kleber auf.

Das Schaltungsmodul kann so nach dem Textilfertigungsprozess an der Anschlussstelle oder bei mehreren zur Auswahl stehenden Anschlussstellen an einer geeigneten Anschlussstelle angebracht werden. Die Verbindungen sind erforderlich, da beim Fertigungsprozess das Textilmaterial zunächst ohne das Schaltungsmodul gefertigt wird und anschließend das Schaltungsmodul mit den Antennenkomponenten verbunden werden muss.

Krimpverbindungen haben den Vorteil, dass sie gemeinsam mit dem Anbringen des Schaltungsmoduls den elektrischen Kontakt zwischen den Antennenanschlüssen des Schaltungsmoduls und den Strahleranschlüssen herstellen. Die Verbindung erfolgt durch mechanische Verspannung und ist daher auch zwischen leitfähigen Materialien möglich, die sich nicht durch Schweißen oder Löten miteinander elektrisch verbinden lassen.

Durch Krimpverbindungen lässt sich das Schaltungsmodul auch gleichzeitig mechanisch am Textilmaterial fixieren, wenn mehrere Fäden umschlossen werden können, die dann gemeinsam für die nötige Zugfestigkeit sorgen. Dies können elektrisch leitfähige und/oder nicht leitfähige Fäden sein.

Schweißverbindungen und Lötverbindungen können zwischen leitfähigen Materialien aus Metallen hergestellt werden. Schließlich sind noch Klebeverbindungen mit leitfähigem Kleber für Materialien möglich, die weder für Krimpverbindungen, Schweißverbindungen und Lötverbindungen geeignet sind.

Weiterhin können die Klebeflächen der Klebeverbindungen UV-durchlässig sein und der leitfähige Kleber UV-härtbar sein. Dadurch kann der Kleber durch UV-Bestrahlung im gesamten Klebebereich in kurzer Zeit zum Aushärten gebracht werden.

Bei einem Zuschnitt des Textilmaterials kann ein Anordnungsbereich für ein Schaltungsmodul festgelegt werden und das Schaltungsmodul an einer in diesem Anordnungsbereich liegenden Anschlussstelle anschließbar und fixierbar sein.

Unter Nutzung der vielfältigen Anschlussmöglichkeiten kann das Schaltungsmodul dann beim Zuschnitt oder der Fertigware zur Kennzeichnung verwendet werden und bei der Fertigware in einem unkritischen Teil oder Bereich, z. B. bei einem Anzug hinter dem Revers oder im Kragen, an der dort nächstliegenden Anschlussstelle angeschlossen werden. Dadurch lässt sich Fertigware beim die Rohware weiterverarbeitenden Betrieb kennzeichnen.

Bei Rohware des Textilmaterials kann auch ein Anordnungsbereich für ein Schaltungsmodul vorzugsweise im Randbereich der Ware festlegbar sein und das Schaltungsmodul an einer in diesem Anordnungsbereich liegenden Anschlussstelle anschließbar und fixierbar sein. Der gebildete Transponder dient dann zur Kennzeichnung der Rohware wie Stoffballen bereits beim Hersteller und kann alle relevanten Herstellungsdaten speichern.

Nachfolgend werden Ausführungsbeispiele der Erfindung anhand der Zeichnung erläutert:
- Fig. 1: zeigt eine Ansicht einer bahnförmigen Textilrohware mit ausschließlich in Bahnrichtung verlaufenden elektrisch leitfähigen Fäden und einem HF-Transponder,
- Fig. 2: zeigt eine Ansicht einer bahnförmigenTextilrohware mit abwechselnd in Bahnrichtung und quer zur Bahnrichtung verlaufenden elektrisch leitfähigen Fäden und einem HF-Transponder,
- Fig. 3: zeigt im Maßstab 1:1 ein Funktionsmuster mit Dipol-Antenne und
- Fig. 4: zeigt im Maßstab 1:1 ein Funktionsmuster mit Groundplane-Antenne.

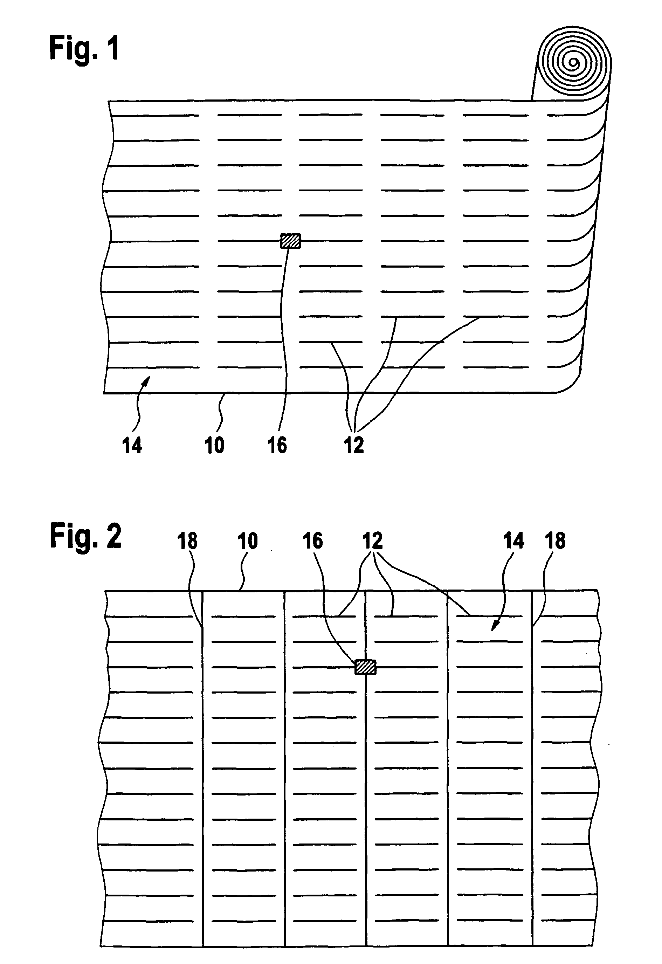

Figur 1 zeigt eine Ansicht einer bahnförmigen Textilrohware 10 mit ausschließlich in Bahnrichtung verlaufenden elektrisch leitfähigen Fäden 12 und einem HF-Transponder. Die elektrisch leitfähigen Fäden 12 verlaufen parallel mit gegenseitigem Abstand. Die leitfähige Länge ist in Abschnitte 14 unterteilt, die jeweils λ/4 der Wellenlänge der beabsichtigten Arbeitsfrequenz betragen. Die Abschnitte 14 können durch unterbrochene Fäden oder durchgängige Faden mit unterbrochener elektrisch leitfähiger Komponente gebildet sein. Alle Enden benachbarter elektrisch leitfähiger Abschnitte 14 in derselben Flucht eigenen sich als Anschlussstellen zur Verbindung mit Antennenanschlüssen eines Schaltungsmoduls. An einer dieser Anschlussstellen ist ein Schaltungsmodul 16 angeschlossen und bildet mit den kontaktierten Antennenkomponenten einen λ/2 Dipol.

Fig. 2 zeigt eine Ansicht einer bahnförmigen Textilrohware 10 mit abwechselnd in Bahnrichtung und quer zur Bahnrichtung verlaufenden elektrisch leitfähigen Fäden 12, 18 und einem HF-Transponder. Die elektrisch leitfähigen Fäden 12, 18 in Bahnrichtung und quer zur Bahnrichtung verlaufen jeweils parallel mit gegenseitigem Abstand. Die leitfähige Länge der Fäden in Bahnrichtung ist in Abschnitte 14 unterteilt, die jeweils λ/4 der Wellenlänge der beabsichtigten Arbeitsfrequenz betragen. Die Abschnitte 14 können durch unterbrochene Fäden oder durchgängige Faden mit unterbrochener elektrisch leitfähiger Komponente gebildet sein. Die elektrisch leitfähigen Fäden 18 quer zur Bahnrichtung sind durchgehend. Die Kreuzungsstellen zwischen den in Bahnrichtung und quer zur Bahnrichtung verlaufenden Fäden eigenen sich als Anschlussstellen zur Verbindung mit Antennenanschlüssen eines Schaltungsmoduls. An einer dieser Anschlussstellen ist ein Schaltungsmodul 16 angeschlossen und bildet mit den kontaktierten Antennenkomponenten eine λ/4 Groundplane aus einem λ/4 Strahler in Form der in Bahnrichtung verlaufenden Antennenkomponente und einem Gegengewicht in Form der quer zur Bahnrichtung verlaufenden Antennenkomponente.

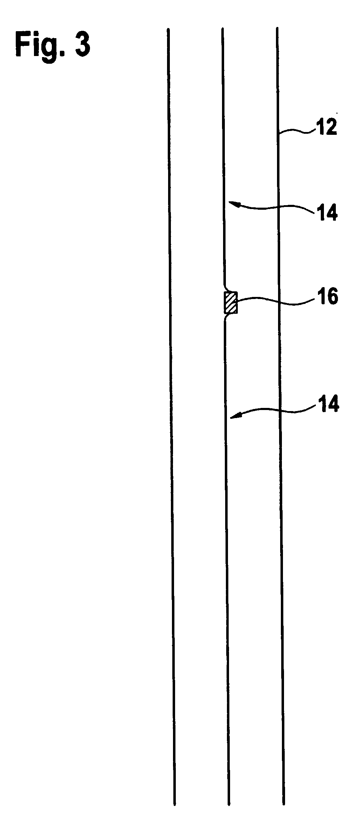

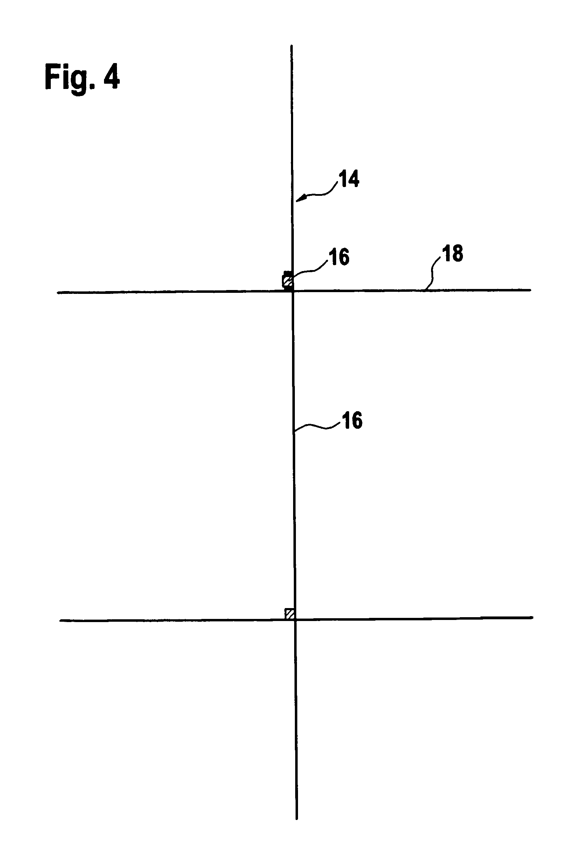

Die Figuren 3 und 4 zeigen jeweils im Maßstab 1:1 Funktionsmuster, und zwar Fig. 3 ähnlich Fig. 1 mit Dipol-Antenne und Fig. 4 ähnlich Fig. 2 mit Groundplane-Antenne.

Die Schaltungsmodule 16 können mit ihren Antennenanschlüssen an den Anschlussstellen der Antennenkomponenten z. B. durch Krimpverbindungen verbunden und am Textilmaterial fixiert sein. Krimpverbindungen krallen sich beim Einsetzten des Schaltungsmoduls mechanisch an den elektrisch leitfähigen Fäden fest. Falls das Schaltungsmodul an einen durchgehenden leitfähigen Faden angeschlossen werden soll, kann dieser beim Anschlussvorgang gleichzeitig mittig mittels eines Trennwerkzeugs getrennt werden. Dazu ist am Schaltungsmodul entweder selbst ein Trennmesser angeordnet oder eine Schneidleiste angeordnet zur Bildung eines Gegenstückes für ein von außen herangeführtes Messer, z. B. in einer Handkrimpzange. Statt eines mechanischen Messers kann auch eine Laserschneidvorrichtung eingesetzt werden.

Die leitfähigen Fäden können innerhalb des Textilmaterials verborgen sein und nur an vorbestimmten Austrittstellen zur Bildung der Anschlussstellen an die Oberfläche hervortreten. Die gilt auch für die Bildung von Strahlerenden, also den heißen Enden der Strahler, wenn dort durchgehend leitende Fäden aufzutrennen sind. Die Abstände der Austrittstellen entsprechen einem Viertel der Wellenlänge der Arbeitsfrequenz.

Das Schaltungsmodul kann bei durchgehend elektrisch leitfähigen Fäden an deren Austrittstelle mit diesen verkrimpt werden und die Fäden müssen an der so gebildeten Anschlussstelle zwischen den Antennenanschlüssen des Schaltungsmoduls sowie an den Strahlerenden zur Abstimmung der Antennenkomponenten auf die Arbeitsfrequenz aufgetrennt werden. Bei elektrisch partiell leitenden Fäden reicht das Verkrimpen der Fäden an der Austrittstelle mit den Antennenanschlüssen des Schaltungsmoduls.

## Patentansprüche

1. Textilmaterial (10) mit Antennenkomponenten eines HF-Transponders, der durch Anschluss eines Schaltungsmoduls (16) an die auf eine Arbeitsfrequenz abgestimmten oder abstimmbaren Antennenkomponenten betreibbar ist, wobei die Antennenkomponenten aus elektrisch leitfähigen Bestandteilen des Textilmaterials (10) selbst bestehen und elektrisch leitfähige Fadenkonstruktionen (12) sind, die maschinell innerhalb eines textilüblichen industriellen Fertigungsprozessesverarbeitbar sind und die als E-Feld-Strahler hinsichtlich ihrer Geometrie auf eine Arbeitsfrequenz im UHF- oder Mikrowellenbereich bemessen sind, wobei die elektrisch leitfähigen Fäden (12) parallel mit gegenseitigem Abstand verlaufen, **dadurch gekennzeichnet, dass** die leitfähige Länge in Abschnitte (14) unterteilt ist, die jeweils N4 der Wellenlänge der beabsichtigten Arbeitsfrequenz betragen, dass die Abschnitte (14) durch durchgängige Fäden (12) mit unterbrochener elektrisch leitfähiger Komponente oder durch partiell leitende Fäden gebildet sind und zwei in derselben Flucht liegende ausgewählte Abschnitte (14) durch Verbindung ihrer Anschlussstellen mit Anschlüssen eines Schaltungsmoduls (16) ein aktiv genutzter λ/2 - Dipol sind.

2. Textilmaterial nach Anspruch **I, dadurch gekennzeichnet, dass** die Antennenkomponenten bei bahnförmigem Material in Bahnrichtung und/oder quer zur Bahnrichtung ausgerichtet angeordnet sind.

3. Textilmaterial nach Anspruch I oder 2, **dadurch gekennzeichnet, dass** die elektrisch leitfähige Fadenkonstruktion (12) ein mit Metall beschichteter Kunststofffaden, ein mit einem Metalldraht oder einer Metalllitze umwickelter Kunststofffaden, ein Kunststofffaden mit einem integrierten Metalldraht oder einer integrierten Metalllitze oder ein Grafitfaden ist.

4. Textilmaterial nach einem der Anspruche 1 bis 3 , **dadurch gekennzeichnet, dass** Antennenkomponenten wenigstens eine Anschlussstelle zur Verbindung mit Antennenanschlüssen des Schaltungsmoduls (16) durch Krimpverbindungen, Schweißverbindungen, Lötverbindungen oder Klebeverbindungen mit leitfähigem Kleber aufweisen.

5. Textilmaterial nach Anspruch 4, **dadurch gekennzeichnet, dass** Klebeflachen der Klebeverbindungen UV-durchlässig sind und der leitfähige Kleber UV-härtbar ist.

6. Textilmaterial nach einem der Anspruche 1 bis 5, **dadurch gekennzeichnet, dass** das Schaltungsmodul (16) selbst und deren Antennenanschlusse durch eine Vergussmasse eingeschlossen sind und die Vergussmasse gleichzeitig mit dem Schaltungsmodul (16) benachbarten Bereich des Textilmaterials (10) verbunden ist zur mechanischen Fixierung des Schaltungsmodul und/oder Erhöhung der Manipulationssicherheit.

## Claims

1. A textile material (10) with antenna components of an HF transponder which can be operated by connection of a circuit module (16) to the antenna components which are tuned to a working frequency or can be tuned to a working frequency, wherein the antenna components consist of electrically conductive components of the textile material (10) itself and are electrically conductive thread constructions (12), which can be processed by machines within an industrial production process common with regard to textiles and which as E-field radiators are dimensioned, with regard to their geometry, to a working frequency in the UHF or microwave range, wherein the electrically conductive threads (12) run parallel spaced apart from one another, **characterised in that** the conductive length is divided into sections (14) which are each λ/4 of the wavelength of the intended working frequency, that the sections (14) are formed by continuous threads (12) with a non-continuous electrically conductive component or by partially conducting threads and two selected sections (14) having the same alignment are an actively used λ/2 dipole through the coupling of their connection points to connections of a circuit module (16).

2. The textile material according to Claim 1, **characterised in that** the antenna components in the case of panel-shaped material are arranged oriented in the panel direction and/or oriented transverse to the panel direction.

3. The textile material according to claim 1 or 2, **characterised in that** the electrically conductive thread construction (12) is a metal-coated plastic thread, a plastic thread wrapped in a metal wire or a metal stranded conductor, a plastic thread with an integrated metal wire or an integrated metal stranded conductor, or a graphite thread.

4. The textile material according to one of claims 1 to 3, **characterised in that** antenna components have at least one connection point for coupling to antenna connections of the circuit module (16) via crimp couplings, welded couplings, soldered couplings or adhesive couplings using conductive adhesive.

5. The textile material according to claim 4, **characterised in that** adhesive surfaces of the adhesive couplings are UV-permeable and the conductive adhesive is UV-hardenable.

6. The textile material according to one of claims 1 to 5, **characterised in that** the circuit module (16) itself and its antenna connections are enclosed by a potting compound and the potting compound is at the same time linked to the region of the textile material (10) adjacent to the circuit module (16) for mechanical fixing of the circuit module and/or increasing the security against tampering.

## Revendications

1. Matière textile (10) avec des composants d'antenne d'un transpondeur HF, qui fonctionne via le raccordement d'un module circuit (16) aux composants d'antenne adaptés ou adaptables à une fréquence de travail, les composants d'antenne étant eux-mêmes constitués par des parties intégrantes électriquement conductrices de la matière textile (10) en forme de constructions de fils (12) électriquement conducteurs et pouvant être mises en oeuvre dans le cadre d'un procédé de fabrication industriel conventionnel dans le domaine du textile et qui sont, sous forme de dispositif de rayonnement de champ électrique, dimensionnées, en ce qui concerne leur géométrie, de sorte à fonctionner à une fréquence de travail dans la gamme UHF ou dans la gamme des hyperfréquences, les fils conducteurs électriquement (12) s'étendant parallèlement avec un écart l'un par rapport à l'autre, **caractérisée en ce que** la longueur conductrice est divisée en sections (14) qui correspondent respectivement à λ/4 de la longueur d'onde de la fréquence de travail envisagée, **en ce que** les sections (14) sont formées par des fils traversants (12) avec un composant conducteur électriquement interrompu ou par des fils partiellement conducteurs et **en ce que** deux sections choisies (14) alignées de manière identique constituent un dipôle λ/2 activement utilisé du fait du raccordement de leurs points de connexion à des bornes d'un module circuit (16).

2. Matière textile suivant la revendication 1, **caractérisée en ce qu'**en cas de matière en forme de lé les composants d'antenne sont disposés de manière orientée dans le sens du lé et/ou transversalement au sens du lé.

3. Matière textile suivant la revendication 1 ou 2, **caractérisée en ce que** la construction de fils conducteurs électriquement (12) se présente sous forme d'un fil en matière artificielle recouvert de métal, un fil en matière artificielle enroulé de fil ou de toron métallique, un fil de matière artificielle avec un fil métallique intégré ou un toron métallique intégré ou un fil de graphite.

4. Matière textile suivant une des revendications 1 à 3, **caractérisée en ce que** des composants d'antenne présentent au moins un point de connexion pour le raccordement à des bornes d'antenne du module circuit (16) au moyen d'assemblages sertis, d'assemblages soudés, d'assemblages brasés ou d'assemblages collés avec une colle conductrice.

5. Matière textile suivant la revendication 4, **caractérisée en ce que** des surfaces de collage des assemblages collés sont perméables aux UV et **en ce que** la colle conductrice est durcissable aux UV.

6. Matière textile suivant une des revendications 1 à 5, **caractérisée en ce que** le module circuit (16) lui-même et ses bornes d'antenne sont enfermés par un produit de scellement et **en ce que** le produit de scellement est en même temps relié à la zone, voisine du module circuit (16), de la matière textile pour la fixation mécanique du module circuit et/ou l'augmentation de la protection contre les manipulations.
